# FASCICULE DE BREVET EUROPEEN

(11) **EP 2 962 459 B1**
(45) Date de publication et mention de la délivrance du brevet: **01.04.2020**
(21) Numéro de dépôt: 14718639.9
(22) Date de dépôt: 24.02.2014
(51) Int. Cl.: H04N 7/00

(54) **DÉRIVATION DE VECTEUR DE MOUVEMENT DE DISPARITÉ, CODAGE ET DÉCODAGE VIDÉO 3D UTILISANT UNE TELLE DÉRIVATION**
DISPARTITÄTSBEWEGUNGSVEKTORHERLEITUNG UND 3D VIDEOKODIERUNG UND -DEKODIERUNG, DIE EINE SOLCHE HERLEITUNG BENUTZEN
DISPARITY MOVEMENT VECTOR DERIVATION AND 3D VIDEO CODING AND DECODING USING THAT DERIVATION

(30) Priorité: 26.02.2013 FR 1351701
(43) Date de publication de la demande: 06.01.2016
(60) Demande divisionnaire: 20153989.7
(73) Titulaire: Orange, 75015 Paris (FR)
(72) Inventeur: MORA, Elie Gabriel, 75004 Paris (FR); JUNG, Joël, 78320 Le Mesnil Saint Denis (FR)
(86) Numéro de dépôt international: PCT/FR2014/050384
(87) Numéro de publication internationale: WO 2014/131975

(56) Documents cités:
- KANG J ET AL: "3D-CE2.h related: Enhanced disparity vector derivation", 3. JCT-3V MEETING; 103. MPEG MEETING; 17-1-2013 - 23-1-2013; GENEVA; (THE JOINT COLLABORATIVE TEAM ON 3D VIDEO CODING EXTENSION DEVELOPMENT OF ISO/IEC JTC1/SC29/WG11 AND ITU-T SG.16 ); URL: HTTP://PHENIX.INT-EVRY.FR/JCT2/,, no. JCT3V-C0050, 10 janvier 2013 (2013-01-10), XP030130466, cité dans la demande
- KANG J ET AL: "3D-CE5.h related: Improvements for disparity vector derivation", 2. JCT-3V MEETING; 102. MPEG MEETING; 13-10-2012 - 19-10-2012; SHANGHAI; (THE JOINT COLLABORATIVE TEAM ON 3D VIDEO CODING EXTENSION DEVELOPMENT OF ISO/IEC JTC1/SC29/WG11 AND ITU-T SG.16 ); URL: HTTP://PHENIX.INT-EVRY.FR/JCT2/,, no. JCT3V-B0047, 10 octobre 2012 (2012-10-10), XP030130228,
- ZHANG K ET AL: "3D-CE5.h related: Improvement on MV candidates for 3DVC", 2. JCT-3V MEETING; 102. MPEG MEETING; 13-10-2012 - 19-10-2012; SHANGHAI; (THE JOINT COLLABORATIVE TEAM ON 3D VIDEO CODING EXTENSION DEVELOPMENT OF ISO/IEC JTC1/SC29/WG11 AND ITU-T SG.16 ); URL: HTTP://PHENIX.INT-EVRY.FR/JCT2/,, no. JCT3V-B0089, 9 octobre 2012 (2012-10-09), XP030130270,
- LI ZHANG ET AL: "3D-CE5.h related: Disparity vector derivation for multiview video and 3DV", 100. MPEG MEETING; 30-4-2012 - 4-5-2012; GENEVA; (MOTION PICTURE EXPERT GROUP OR ISO/IEC JTC1/SC29/WG11),, no. m24937, 1 mai 2012 (2012-05-01), XP030053280,

## Description

### Domaine de l'invention

La présente invention se rapporte de manière générale au domaine du traitement d'images en trois dimensions (3D), et plus précisément au codage et au décodage d'images numériques 3D et de séquences d'images numériques 3D. Elle concerne en particulier, mais non exclusivement, des applications de vidéo 3D qui mettent en œuvre un codage/décodage d'images issues de différentes caméras.

L'invention peut notamment, mais non exclusivement, s'appliquer au codage vidéo mis en œuvre dans les codeurs vidéo actuels AVC et HEVC et leurs extensions (MVC, 3D-AVC, MV-HEVC, 3D-HEVC, etc), et au décodage correspondant.

### Arrière-plan de l'invention

Une représentation 3D d'une vidéo peut être obtenue par multiplexage de deux vues d'une même scène (format stéréo), enregistrées par deux caméras différentes d'un unique dispositif stéréoscopique.

Deux types de codage MFC et MVC (pour « Multiview Frame-compatible Coding » et « Multiview Video Coding » en anglais) sont généralement utilisés pour coder des images composées de deux vues en exploitant des redondances existant entre les deux vues.

Bien que le format de codage stéréo domine le marché actuellement, le développement de nouveaux services de vidéo 3D tels que 3DTV ou FTV nécessitent une représentation fluidifiée de scènes tridimensionnelles, qui peut être obtenue en multiplexant simultanément plus de deux vues sur un dispositif 3D. A cet effet, au moins trois images issues de différents points de vue peuvent être acquises, encodées puis transmises selon le format MVV (pour « MultiView Vidéo » en anglais) et le codage MVC peut être utilisé afin de coder ces images. Cependant, le coût associé au codage MVC est élevé, particulièrement lorsque le nombre de points de vue est grand.

Un nouveau format de codage vidéo, appelé MVD (pour « Multiview Video + Depth » en anglais), fait l'objet de développements actuels. Selon ce format, des caméras de profondeur sont utilisées en plus de caméras de texture. Chaque composante de texture d'une image donnée est associée à une composante de profondeur de cette image. Après codage puis transmission, les composantes de texture et de profondeur reconstruites peuvent être transmises à un synthétiseur qui génère un nombre requis de vues intermédiaires. L'avantage des composantes de profondeur est qu'elles sont uniquement composées d'un canal de luminance et qu'elles sont principalement composées de régions lisses séparées par des bordures. Ainsi, elles sont moins coûteuses à coder que les composantes de texture. De plus, des corrélations entre deux composantes de texture ou entre deux composantes de profondeur, ainsi que des corrélations entre une composante de texture et une composante de profondeur peuvent être exploitées selon le format MVD, par exemple au moyen d'un codec 3DVC (pour « 3D Video Coding » en anglais), afin d'améliorer l'efficacité du codage.

Par ailleurs, des standards prévoient une prédiction d'informations de codage pour un bloc courant, en fonction d'informations de codage de blocs déjà codés puis décodés, toujours dans le but d'améliorer l'efficacité du codage.

Un type d'informations de codage est par exemple un vecteur de mouvement temporel (« Temporal Motion Vector » en anglais) qui décrit le mouvement d'une vue à l'instant courant par rapport à cette même vue à un instant précédent.

Le mode AMVP (pour « Advanced Motion Vector Prédiction » en anglais) introduit une liste de vecteurs de mouvement temporels candidats pour prédire le vecteur de mouvement temporel du bloc courant d'une vue courante. Seuls la différence (résiduel) entre le vecteur de mouvement du bloc courant et le meilleur vecteur de mouvement temporel candidat de la liste au sens d'un critère de débit-distorsion, et un index signalant ce meilleur vecteur candidat, sont transmis au décodeur, réduisant ainsi le coût de transmission des informations liées au vecteur de mouvement temporel du bloc courant.

Le mode MERGE évite de prédire une information de codage d'un bloc courant, telle que par exemple un vecteur de mouvement temporel. Le mode MERGE permet en effet au bloc courant d'une vue courante d'hériter directement d'un vecteur de mouvement temporel choisi dans une liste de vecteurs de mouvement temporels candidats qui peut comprendre des vecteurs de mouvement temporels associés respectivement à des blocs voisins du bloc courant, lesdits blocs voisins ayant déjà été codés puis décodés, ou bien associés respectivement à des blocs correspondant au bloc courant et contenus dans des trames précédemment codées puis décodées. De tels blocs correspondant au bloc courant sont également appelés blocs co-localisés (« collocated » en anglais) dans l'état de l'art. Le vecteur de mouvement temporel du bloc courant ainsi choisi par héritage dans la liste de vecteurs candidats ne nécessite alors pas d'être codé dans la mesure où le même principe peut être appliqué lors du décodage.

Dans le standard 3D-HEVC (pour « 3D-High Efficiency Video Coding » en anglais) en cours d'élaboration, des techniques employant à la fois la prédiction et l'héritage sont proposées.

Le standard 3D-HEVC permet en particulier d'ajouter dans la liste de vecteurs de mouvement temporels candidats du mode AMVP ou du mode MERGE d'autres types de vecteurs de mouvement tels que :
- un vecteur de mouvement temporel calculé à partir d'un vecteur de mouvement de disparité (« Disparity Motion Vector » en anglais), un tel vecteur de mouvement candidat étant désigné par « candidat multivue » ;
- un vecteur de mouvement de disparité.

De façon connue en soi, un vecteur de mouvement de disparité est un vecteur de mouvement utilisé dans le cadre d'une prédiction inter-vues (« Interview Prédiction » en anglais). Il s'agit d'un vecteur de mouvement qui décrit le mouvement entre le bloc courant d'une vue dépendante courante et un bloc correspondant à ce bloc courant dans une vue de base précédemment codée puis décodée, la vue dépendante courante et la vue de base étant chacune représentatives d'une même scène au même instant.

Un tel vecteur de mouvement de disparité peut par ailleurs être utilisé dans le cadre d'une prédiction inter-vues du résiduel d'un bloc courant dans une vue courante (« Interview Residual Prédiction » en anglais). Selon cette prédiction, il est procédé à une recherche, dans une vue de base précédemment codée puis décodée, d'un bloc qui correspond au bloc courant de la vue dépendante courante et qui est pointé par le vecteur de mouvement de disparité du bloc courant. Il est alors procédé au calcul du résiduel de ce bloc correspondant pour prédire le résiduel du bloc courant.

Il existe différentes méthodes de dérivation de vecteurs de mouvement de disparité qui peuvent être utilisées dans le standard à venir 3D-HEVC.

Une première méthode appelée DMDV (abréviation anglaise de « Depth Map Disparity Vector ») consiste à estimer une carte de profondeur pour chaque vue dépendante, puis à choisir le vecteur de mouvement de disparité qui correspond à la valeur maximale de profondeur dans le bloc co-localisé dans la carte de profondeur estimée. L'inconvénient de cette première méthode est qu'elle est coûteuse en calculs et en mémoire.

Une seconde méthode appelée NBDV (abréviation anglaise de « Neighbour Disparity Vector ») consiste à considérer, pour un bloc courant à coder d'une vue courante, cinq blocs spatiaux, voisins du bloc courant dans la vue courante, et deux blocs temporels, voisins du bloc courant dans deux trames de référence précédemment codées puis décodées. Les cinq blocs voisins sont un bloc A₀ situé directement en dessous à gauche du bloc courant, un bloc A₁ situé directement au-dessus du bloc A₀ et situé en bas à gauche du bloc courant, un bloc B₀ situé directement au-dessus et à droite du bloc courant, un bloc B₁ voisin du bloc B₀ et situé directement au-dessus du bloc courant et un bloc B₂ situé directement au-dessus et à gauche du bloc courant. Les deux blocs temporels sont un bloc CENTER situé au centre du bloc correspondant au bloc courant et un bloc RB situé directement en-dessous et à droite du bloc correspondant au bloc courant. Le procédé de dérivation de vecteur de mouvement de disparité selon cette deuxième méthode consiste à vérifier si un des blocs A₀, A₁, B₀, B₁, B₂, CENTER₁ (première trame de référence), CENTER₂ (deuxième trame de référence), RB₁ (première trame de référence) et RB₂ (deuxième trame de référence) est associé à un vecteur de mouvement de disparité. Une telle vérification est effectuée dans l'ordre particulier suivant : CENTER₁, RB₁, CENTER₂, RB₂, A₁, B₁, B₀, A₀, B₂ pour la première vue dépendante, et RB₁, CENTER₁, RB₂, CENTER₂, A₁, B₁, B₀, A₀, B₂ pour la deuxième vue dépendante. Dès le premier vecteur de disparité trouvé pour un de ces blocs dans l'ordre de vérification précité, il est sélectionné comme étant le vecteur de mouvement de disparité dérivé final. La vérification s'arrête alors, même s'il reste encore des blocs à vérifier.

Il peut arriver qu'à l'issue de la vérification, aucun vecteur de mouvement de disparité ne soit trouvé. Dans ce cas, pour un bloc considéré parmi les blocs A₀, A₁, B₀, B₁, B₂ et qui a été codé à l'aide d'une prédiction de mouvement selon le mode AMVP ou MERGE, le vecteur de mouvement temporel associé à ce bloc a pu impliquer la dérivation d'un vecteur de mouvement de disparité si le candidat multivue a été choisi pour coder ce bloc, comme expliqué plus haut dans l'introduction. Le procédé de dérivation de vecteur de mouvement de disparité selon la deuxième méthode consiste alors à vérifier si un des blocs spatiaux A₀, A₁, B₀, B₁, B₂ est associé à un vecteur de mouvement temporel calculé à partir d'un vecteur de mouvement de disparité. Une telle vérification est effectuée dans l'ordre particulier suivant: A₀, A₁, B₀, B₁, B₂. Dès qu'un vecteur de mouvement temporel calculé à partir d'un vecteur de mouvement de disparité est trouvé en association avec un des blocs dans l'ordre de vérification précité, le vecteur de mouvement de disparité utilisé pour dériver ce vecteur de mouvement temporel est sélectionné comme étant le vecteur de mouvement de disparité dérivé final.

L'inconvénient de cette deuxième méthode de dérivation est que le premier vecteur de mouvement de disparité qui, selon les cas est trouvé ou lu, n'est peut-être pas celui qui optimisera l'efficacité du codage ou du décodage du bloc courant.

Une troisième méthode de dérivation peut être utilisée dans le cas où une vue courante a un format du type MVD et que sa composante de profondeur a été codée avant sa composante de texture, à l'aide d'un outil appelé FCO (abréviation anglaise de « Flexible Coding Order »). A cet effet, pour dériver le vecteur de mouvement de disparité d'un bloc courant d'une composante de texture d'une vue courante, il est procédé aux étapes suivantes :
- détermination du bloc co-localisé en profondeur dans la composante de profondeur codée puis décodée qui est associée à la composante de texture courante,
- détermination d'un vecteur de mouvement de disparité qui correspond à la valeur maximale de profondeur dans le bloc co-localisé en profondeur dans la composante de profondeur,
- sélection du vecteur de mouvement de disparité déterminé en tant que vecteur de mouvement de disparité final.

L'inconvénient d'une telle méthode de dérivation est qu'elle est limitée à des vues qui contiennent nécessairement des composantes de texture et de profondeur. De plus, elle ne prend pas en compte d'autres types de vecteurs de mouvement de disparité, tels que par exemple des vecteurs de mouvement de disparité utilisés pour dériver des vecteurs de mouvement temporels.

Une quatrième méthode de dérivation consiste à raffiner le vecteur de mouvement de disparité final qui a été obtenu à l'aide de la seconde méthode NBDV précitée. Cette méthode est appelée DoNBDV ((abréviation anglaise de « Depth Oriented Neighbour Disparity Vector »). Une telle méthode est utilisée dans le cas où une vue courante a un format du type MVD et que sa composante de texture a été codée avant sa composante de profondeur. Le vecteur de mouvement de disparité final est alors utilisé pour déterminer un bloc de profondeur dans la vue de base précédemment codée puis décodée, correspondant au bloc courant de texture dans la vue courante. Le nouveau vecteur de mouvement de disparité final DoNBDV est celui qui correspond à la valeur maximale de profondeur dans ce bloc de profondeur déterminé.

L'inconvénient d'une telle méthode de dérivation est qu'elle est limitée à des vues qui contiennent nécessairement des composantes de texture et de profondeur. Par ailleurs, comme elle est déduite de la seconde méthode, elle hérite nécessairement des inconvénients propres à cette dernière.

Une cinquième méthode de dérivation proposée dans le document J. Kang, Y. Chen, L. Zhang and M. Karczewicz, "3D-CE2.h related: Enhanced disparity vector dérivation", ITU-T SG 16 WP 3 and ISO/IEC JTC 1/SC 29/WG 11 JCT3V-C0050 vise à améliorer la deuxième méthode de dérivation précitée. A cet effet, au cours de la vérification des blocs dans l'ordre particulier suivant : CENTER₁, RB₁, CENTER₂, RB₂, A₁, B₁, B₀, A₀, B₂ (première vue dépendante) ou RB1, CENTER1, RB2, CENTER2, A1, B1, B0, A0, B2 (deuxième vue dépendante), sont destinés à être stockés :
- au maximum trois vecteurs de mouvement de disparité spatiaux dans une première liste appelée SDVC (abréviation anglaise de « Spatial Disparity Vector Candidates »),
- et au maximum trois vecteurs de mouvement de disparité temporels dans une deuxième liste appelée TDVC (abréviation anglaise de « Temporal Disparity Vector Candidates »).

Plusieurs cas peuvent se présenter à l'issue de la vérification.

Dans un premier cas, il peut arriver qu'à l'issue de la vérification, aucun vecteur de mouvement de disparité ne soit trouvé. Dans ce cas, le vecteur de mouvement de disparité final est obtenu de la même façon que dans la deuxième méthode, en sélectionnant le premier vecteur de mouvement de disparité utilisé pour dériver un vecteur de mouvement temporel associé aux blocs spatiaux dans l'ordre suivant : A₀, A₁, B₀, B₁, B₂.

Dans un deuxième cas, un seul vecteur de mouvement de disparité a été stocké, qu'il s'agisse d'un vecteur SDVC ou TDVC. Cet unique vecteur stocké est alors sélectionné comme vecteur de mouvement de disparité final.

Dans un troisième cas, si uniquement deux vecteurs de mouvement de disparité ont été stockés, c'est-à-dire soit deux vecteurs SDVC, soit deux vecteurs TDVC, soit un vecteur SDVC et un vecteur TDVC, le plus grand des deux vecteurs est sélectionné comme vecteur de mouvement de disparité final.

Dans un quatrième cas, si trois vecteurs de mouvement de disparité ou plus ont été stockés, une fonction médiane est appliquée sur les deux premiers vecteurs TDVC lus en mémoire et sur le premier vecteur SDVC lu en mémoire. Le vecteur résultant est alors sélectionné comme vecteur de mouvement de disparité final. S'il n'y a pas suffisamment de vecteurs TDVC (respectivement SDVC), le premier vecteur SDVC (respectivement TDVC) est utilisé en entrée de la fonction médiane.

Bien que la sélection du vecteur de mouvement de disparité final soit obtenue à partir de plusieurs vecteurs de mouvement de disparité contenus dans une ou deux listes, contrairement à la deuxième méthode de dérivation qui ne retient qu'un seul vecteur de mouvement de disparité, l'inconvénient de cette cinquième méthode est que la première liste de vecteurs SDVC, tout comme la deuxième liste de vecteurs TDVC, ne contiennent que des vecteurs de mouvement de disparité qui sont utilisés dans le cadre d'une prédiction inter-vues. Autrement dit, le procédé de dérivation selon la cinquième méthode ne se base que sur une pluralité de vecteurs de mouvement de disparité homogènes. Aucune des première et deuxième listes ne contient de vecteurs de disparité d'un autre type, tels que par exemple ceux à partir desquels sont dérivés des vecteurs de mouvement temporels. La sélection du vecteur de mouvement de disparité selon cette cinquième méthode n'est donc pas optimale.

### Objet et résumé de l'invention

Un des buts de l'invention est de remédier à des inconvénients de l'état de la technique précité.

A cet effet, un objet de la présente invention concerne un procédé de dérivation d'un vecteur de mouvement de disparité, dit vecteur de mouvement de disparité final.

Un tel procédé de dérivation est remarquable en ce qu'il comprend les étapes consistant à :
- construire (S1) une pluralité de listes (L₁, L₂) de vecteurs de mouvement de disparité, ladite pluralité de listes comprenant au moins une liste dans laquelle au moins deux vecteurs de mouvement de disparité ont été obtenus respectivement selon deux méthodes d'estimation différentes,
   - appliquer (S3) une fonction aux vecteurs de mouvement de disparité de chaque liste pour délivrer un vecteur de mouvement de disparité pour chaque liste,
   - appliquer une fonction aux vecteurs de disparités délivrés pour obtenir le vecteur de disparité final,
   dans lequel les fonctions appliquées appartiennent à la liste des fonctions statistiques : médian, médian pondéré, moyenne, moyenne pondérée.

Compte tenu de la diversité des vecteurs de mouvement de disparité contenus dans au moins une liste de vecteurs de disparité, la sélection du vecteur de disparité final est rendue beaucoup plus fine que celle effectuée dans l'art antérieur qui ne propose qu'un même type de vecteurs de disparité par liste.

Une telle disposition s'avère particulièrement avantageuse dans le cas où le vecteur de mouvement de disparité est destiné à être ajouté à un ensemble de vecteurs de mouvement susceptibles d'être sélectionnés pour prédire le mouvement d'une image courante ayant par exemple un format de type MVV ou MVD, car la prédiction est rendue plus fiable et plus précise. Il en résultera un codage et un décodage de l'image courante plus efficace.

Une telle disposition s'avère également avantageuse dans le cas où le vecteur de mouvement de disparité issu du procédé de dérivation est utilisé pour la prédiction du résiduel du bloc courant d'une vue d'une image multi-vues, rendant cette prédiction également plus fiable et plus précise.

De telles dispositions permettent par ailleurs d'augmenter le choix et la diversité des vecteurs de mouvement de disparité en proposant plusieurs listes de vecteurs de mouvement de disparité, pour une obtention optimisée du vecteur de disparité final. Parmi ces différentes listes, peuvent coexister plusieurs listes dont certaines contiennent au moins deux vecteurs de mouvement de disparité obtenus respectivement selon deux méthodes d'estimation différentes, et certaines autres ne contiennent que des vecteurs de mouvement de disparité obtenus selon la même méthode d'estimation.

Selon un mode de réalisation particulier, il est procédé, préalablement à l'étape d'application d'une fonction, à une étape consistant à limiter, dans au moins une liste, le nombre de vecteurs de mouvement de disparité.

Une telle disposition a pour avantage d'économiser les ressources en calculs et en mémoire au codeur et au décodeur.

Selon une première variante de cet autre mode de réalisation particulier, l'étape de limitation précitée consiste par exemple à limiter à Kᵢ éléments au maximum le nombre de vecteurs dans au moins une liste de vecteurs de mouvement de disparité.

Selon une deuxième variante de cet autre mode de réalisation particulier, l'étape de limitation précitée consiste à :
- vérifier, dans au moins une liste de vecteurs de mouvement de disparité, si au moins deux vecteurs de mouvement de disparité sont redondants vis-à-vis de leur amplitude et orientation,
- supprimer de la liste l'un des deux vecteurs, en cas de vérification positive.

Une telle deuxième variante permet d'accélérer l'obtention du vecteur de mouvement de disparité final par suppression, dans au moins une liste de vecteurs de mouvement de disparité considérée, des vecteurs de mouvement de disparité dont l'amplitude et l'orientation sont égales ou voisines, la fonction étant alors appliquée sur un nombre réduit de vecteurs de disparité.

Selon une troisième variante de cet autre mode de réalisation particulier, l'étape de limitation se distingue de celle de la deuxième variante par le fait qu'elle est appliquée sur au moins une liste de vecteurs de mouvement de disparité qui a été précédemment réduite en nombre de vecteurs à la suite de la mise en œuvre de la première variante d'étape de limitation.

Une telle troisième variante permet d'accélérer davantage l'obtention du vecteur de mouvement de disparité final, puisqu'elle est appliquée sur au moins une liste de vecteurs de mouvement de disparité dont la taille a été précédemment réduite.

L'invention concerne également un dispositif de dérivation d'un vecteur de mouvement de disparité, lequel est destiné à mettre en œuvre le procédé de dérivation précité.

Un tel dispositif de dérivation est remarquable en ce qu'il comprend :
- des moyens (CTR) de construction d'une pluralité de listes de vecteurs de mouvement de disparité, ladite pluralité de listes comprenant au moins une liste comprenant au moins deux vecteurs de mouvement de disparité obtenus respectivement selon deux méthodes d'estimation différentes,
- des moyens (APP) d'application d'une fonction aux vecteurs de mouvement de disparité de chaque liste pour délivrer un vecteur de mouvement de disparité pour chaque liste,
- des moyens (APP) d'application d'une fonction aux vecteurs de disparités délivrés pour obtenir le vecteur de disparité final,
dans lequel les fonctions appliquées appartiennent à la liste des fonctions statistiques : médian, médian pondéré, moyenne, moyenne pondérée.

L'invention concerne également un procédé de décodage d'une image courante comprenant au moins deux vues qui sont respectivement représentatives d'une même scène, un tel procédé de décodage comprenant une étape de dérivation d'un vecteur de mouvement de disparité.

Un tel procédé de décodage est remarquable en ce que l'étape de dérivation précitée est effectuée conformément au procédé de dérivation selon l'invention.

L'invention concerne également un dispositif de décodage d'une image courante comprenant au moins deux vues qui sont respectivement représentatives d'une même scène, un tel dispositif étant adapté pour mettre en œuvre le procédé de décodage précité et comprenant des moyens de dérivation d'un vecteur de mouvement de disparité.

Un tel dispositif de décodage est remarquable en ce que les moyens de dérivation précités sont contenus dans un dispositif de dérivation selon l'invention.

L'invention concerne également un procédé de codage d'une image courante comprenant au moins deux vues qui sont respectivement représentatives d'une même scène, un tel procédé de codage comprenant une étape de dérivation d'un vecteur de mouvement de disparité.

Un tel procédé de codage est remarquable en ce que l'étape de dérivation précitée est effectuée conformément au procédé de dérivation selon l'invention.

L'invention concerne également un dispositif de codage d'une image courante comprenant au moins deux vues qui sont respectivement représentatives d'une même scène, un tel dispositif étant adapté pour mettre en œuvre le procédé de codage précité et comprenant des moyens de dérivation d'un vecteur de mouvement de disparité.

Un tel dispositif de codage est remarquable en ce que les moyens de dérivation précités sont contenus dans un dispositif de dérivation selon l'invention.

L'invention concerne encore un programme d'ordinateur comportant des instructions pour mettre en œuvre le procédé de dérivation, le procédé de codage ou le procédé de décodage selon l'invention, lorsqu'il est exécuté sur un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement lisible par un ordinateur sur lequel est enregistré un programme d'ordinateur, ce programme comportant des instructions adaptées à la mise en œuvre du procédé de codage ou de décodage selon l'invention, tels que décrits ci-dessus.

Le support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé de codage ou de décodage précité.

Le dispositif de codage et le programme d'ordinateur correspondant précités présentent au moins les mêmes avantages que ceux conférés par le procédé de codage selon la présente invention.

Le dispositif de dérivation, le procédé de décodage, le dispositif de décodage, le procédé de codage, le dispositif de codage, le programme d'ordinateur et le support d'enregistrement correspondants précités présentent au moins les mêmes avantages que ceux conférés par le procédé de dérivation selon la présente invention.

### Brève description des dessins

D'autres caractéristiques et avantages apparaîtront à la lecture de modes de réalisation préférés décrits en référence aux figures dans lesquelles:
- la figure 1 représente des étapes du procédé de dérivation selon l'invention,
- la figure 2 représente un mode de réalisation d'un dispositif de dérivation selon l'invention,
- la figure 3 représente les étapes du procédé de codage selon l'invention,
- la figure 4 représente un mode de réalisation d'un dispositif de codage apte à mettre en œuvre le procédé de codage représenté à la figure 3,
- la figure 5 représente un mode de réalisation d'un dispositif de décodage selon l'invention,
- la figure 6 représente les étapes de décodage aptes à être mises en œuvre dans le dispositif de décodage représenté sur la figure 5.

### Description détaillée du procédé de dérivation de l'invention

Un mode de réalisation de l'invention va maintenant être décrit, dans lequel le procédé de dérivation de vecteur de mouvement de disparité selon l'invention est par exemple destiné à être mis en œuvre dans le cas du codage/décodage d'une image ou d'une séquence d'images selon un flux binaire proche de celui qu'on obtient par un codage/décodage conforme par exemple à la norme en cours d'élaboration 3D-HEVC.

A cet effet, le ou les images considérées peuvent être par exemple sous le format MVV ou MVD.

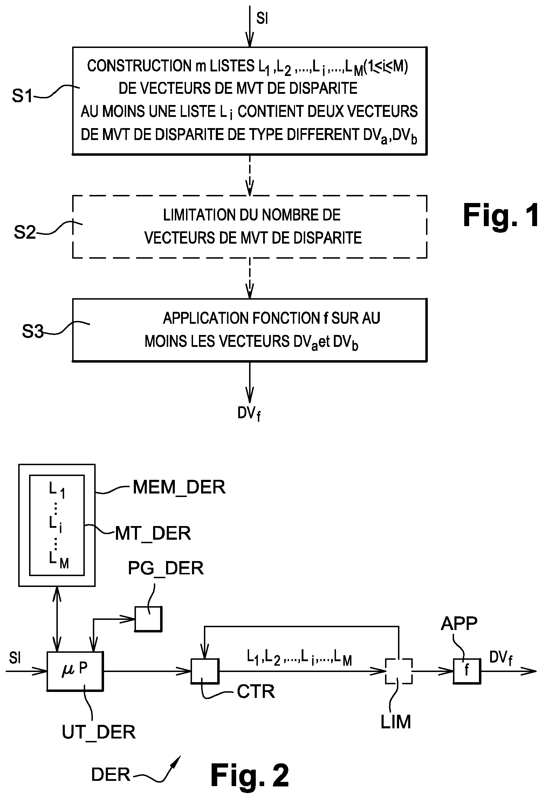

Dans ce mode de réalisation, le procédé de dérivation selon l'invention est par exemple implémenté de manière logicielle ou matérielle par modifications d'un dispositif de dérivation contenu dans un codeur/décodeur initialement conforme à la norme 3D-HEVC. Le procédé de dérivation selon l'invention est représenté sous la forme d'un algorithme comportant des étapes S1 à S3 telles que représentées à la **figure 1****.**

Selon le mode de réalisation de l'invention, le procédé de dérivation selon l'invention est implémenté dans un dispositif de dérivation DER représenté à la **figure 2****.**

Comme illustré en **figure 2****,** un tel dispositif de dérivation comprend une mémoire MEM_DER comprenant une mémoire tampon MT_DER, une unité de traitement UT_DER équipée par exemple d'un microprocesseur µP et pilotée par un programme d'ordinateur PG_DER qui met en œuvre le procédé de dérivation selon l'invention. A l'initialisation, les instructions de code du programme d'ordinateur PG_DER sont par exemple chargées dans une mémoire RAM avant d'être exécutées par le processeur de l'unité de traitement UT_DER.

Le procédé de dérivation représenté sur la **figure 1** s'applique à toute image courante de type MVV ou MVD d'une séquence SI d'images à coder.

En référence à la **figure 1****,** il est procédé, au cours d'une étape S1, à la construction d'une pluralité de listes de vecteurs de mouvement de disparité L₁, L₂,..., Lᵢ,...L_{M} avec 1≤i≤M. Ladite liste Lᵢ parmi les m listes contient au moins deux vecteurs de mouvement de disparité DVₐ et DV_{b} de type différent, c'est-à-dire qui ont été obtenus respectivement selon deux méthodes d'estimation différentes.

Les vecteurs DVₐ et DV_{b} peuvent avoir été obtenus par exemple à l'issue d'une des méthodes de dérivation suivantes qui ont été décrites dans l'introduction de la description :
- DMDV,
- DCP (abréviation anglaise de « Disparity-Compensated Prédiction »), soit après considération des blocs co-localisés temporels CENTER₁, RB₁, RB₂, CENTER₂, soit après considération des blocs voisins spatiaux A₁, B₁, B₀, A₀, B₂,
- NBDV,
- FCO,
- DoNBDV,
- etc...

En variante, il est également possible de considérer, dans la liste précitée, au moins un vecteur de mouvement de disparité qui a été obtenu par un décalage, d'un ou de plusieurs pixels en x ou en y, d'un vecteur de mouvement de disparité obtenu selon l'une des méthodes de dérivation listées ci-dessus. Il s'agira alors d'un vecteur de mouvement dérivé décalé (« Shifted Derivated Vector » en anglais).

Dans le cas par exemple où une seule liste L₁ est construite, ladite liste peut comprendre par exemple six vecteurs de mouvement de disparité DV₁₁, DV₁₂, DV₁₃, DV₁₄, DV₁₅, DV₁₆, où :
- DV₁₁ a été obtenu selon la méthode de dérivation DMDV précitée ;
- DV₁₂ et DV₁₃ ont été obtenus à l'aide d'une prédiction compensée en disparité DCP (abréviation anglaise de « Disparity-Compensated Prédiction ») ;
- DV₁₄ et DV₁₅ ont été obtenus selon la méthode de dérivation NBDV précitée ;
- DV₁₆ a été obtenu selon la méthode de dérivation DoNBDV précitée.

Dans le cas par exemple où plusieurs listes sont construites, par exemple trois listes L₁, L₂ et L₃, au moins une desdites listes comprend au moins deux vecteurs de mouvement de disparité de type différent. Dans cet exemple, les deux listes L₁ et L₃ comprennent chacune au moins deux vecteurs de mouvement de disparité de type différent. Les listes L₁ à L₃ sont construites telles que :
- L₁ comprend par exemple quatre vecteurs de mouvement de disparité DV₁₁, DV₁₂, DV₁₃, DV₁₄, où DV₁₁ et DV₁₂ ont été obtenus selon la méthode de dérivation NBDV précitée et où DV₁₃ et DV₁₄ ont été obtenus à l'aide d'une prédiction compensée en disparité DCP ;
- L₂ comprend par exemple deux vecteurs de mouvement de disparité DV₂₁, DV₂₂, où DV₂₁ et DV₂₂ ont été obtenus selon la méthode de dérivation DMDV précitée ;
- L₃ comprend par exemple deux vecteurs de mouvement de disparité DV₃₁, DV₃₂, où DV₃₁ et DV₃₂ ont été obtenus respectivement selon les méthodes de dérivation DoNBDV et FCO précitées.

En référence à la **figure 2****,** ladite étape de construction S1 est mise en œuvre par un module de construction CTR qui est piloté par le microprocesseur µP de l'unité de traitement UT_DER.

Les listes L₁, L₂,..., Lᵢ,..., L_{M} ainsi construites sont stockées dans la mémoire tampon MT_DER du dispositif de dérivation de la **figure 2****.**

En référence à la **figure 1****,** il est procédé, au cours d'une étape S2, à la limitation, dans au moins une des listes précitées, du nombre de vecteurs de mouvement de disparité.

En référence à la **figure 2****,** ladite étape de limitation S2 est mise en œuvre par un module de limitation LIM qui est piloté par le microprocesseur µP de l'unité de traitement UT_DER.

Une telle étape S2 est optionnelle et est représentée pour cette raison en pointillé sur la **figure 1****,** de même que le module de limitation LIM sur la **figure 2****.** Une telle étape S2 sera décrite plus en détail dans la suite de la description.

En référence à la **figure 1****,** il est procédé, au cours d'une étape S3, à l'application d'une fonction f auxdits au moins deux vecteurs de mouvement de disparité DVₐ et DV_{b} de type différent d'au moins une liste.

En référence à la **figure 2****,** ladite étape d'application S3 est mise en œuvre par un module d'application de fonction APP qui est piloté par le microprocesseur µP de l'unité de traitement UT_DER.

A la suite de l'étape S3, un vecteur de mouvement de disparité final DV_{f} est délivré.

Ladite fonction f est une fonction mathématique ou statistique telle qu'un médian, une moyenne, une moyenne pondérée, un médian pondéré, etc.... Dans le cas d'une moyenne ou d'un médian pondéré, la pondération peut être fonction du type de vecteurs de mouvement de disparité considérés.

Dans le cas par exemple où plusieurs listes sont construites, telles que par exemple les trois listes L₁, L₂ et L₃ précitées, plusieurs cas de figure non limitatifs peuvent se présenter.

Selon un cas :
- une fonction f1 du même type que la fonction f est appliquée sur tous les vecteurs de mouvement de disparité de la liste L₁, délivrant un premier vecteur de mouvement de disparité,
- une fonction f2 du même type que la fonction f est appliquée sur tous les vecteurs de mouvement de disparité de la liste L₂, délivrant un deuxième vecteur de mouvement de disparité,
- une fonction f3 du même type que la fonction f est appliquée sur tous les vecteurs de mouvement de disparité de la liste L₃, délivrant un troisième vecteur de mouvement de disparité,
- une fonction f4 du même type que la fonction f est appliquée sur les premier, deuxième et troisième vecteurs de mouvement de disparité délivrés.

On va maintenant décrire différentes variantes de réalisation de l'étape S2 de limitation du nombre de vecteurs de mouvement de disparité.

Selon une première variante de réalisation, l'étape S2 est mise en œuvre lors de la construction des m listes L₁, L₂,..., Lᵢ,..., L_{M} à l'étape S1 précitée. Une telle étape S2 consiste par exemple à :
- limiter à Kᵢ éléments au maximum le nombre de vecteurs dans au moins une liste Lᵢ considérée, avec par exemple Kᵢ=3, de façon à obtenir une liste L'₁ réduite en taille ou bien au moins une liste L'ᵢ réduite en taille,
- supprimer au moins un type de vecteurs de mouvement de disparité considéré, par exemple les vecteurs de mouvement obtenus à l'issue de la méthode de dérivation DMDV précitée,
- supprimer au moins une des m listes L₁, L₂,..., Lᵢ,..., L_{M} dans le cas où m listes sont construites.

Selon une deuxième variante de réalisation, l'étape S2 est mise en œuvre à la suite de l'étape S1 précitée.

L'étape S2 consiste par exemple à :
- vérifier, dans au moins une liste Lᵢ considérée, si au moins deux vecteurs de mouvement de disparité sont redondants vis-à-vis de leur amplitude et orientation,
- supprimer de ladite liste l'un desdits deux vecteurs redondants, en cas de vérification positive.

A l'issue de l'étape S2 selon la deuxième variante, est obtenue une liste L"₁ réduite en taille ou bien au moins une liste L"ᵢ réduite en taille.

Selon une troisième variante de réalisation, une telle étape S2 consiste par exemple à :
- vérifier, dans au moins une liste L'ᵢ réduite en taille, si au moins deux vecteurs de mouvement de disparité sont redondants vis-à-vis de leur amplitude et orientation,
- supprimer de ladite liste réduite en taille l'un desdits deux vecteurs redondants, en cas de vérification positive.

Selon une quatrième variante de réalisation, pour une liste considérée réduite en taille ou non, la vérification de la redondance peut être effectuée sur un certain nombre seulement de vecteurs de mouvement de disparité contenus dans la liste.

Un scénario de procédé de dérivation selon l'invention va maintenant être décrit à titre d'exemple non limitatif.

Au cours de l'étape S1 précitée, il est procédé à la construction de trois listes L₁, L₂, L₃. La liste L₁ contient des vecteurs de mouvement de disparité obtenus selon la méthode de dérivation NBDV précitée. Une telle liste contient par exemple au moins un vecteur obtenu par prédiction DCP et au moins un vecteur obtenu par dérivation d'un vecteur de mouvement temporel. La liste L₂ contient au moins deux vecteurs de mouvement de disparité obtenus respectivement selon les méthodes de dérivation DMDV et DoNBDV. La liste L₃ contient au moins un vecteur de mouvement de disparité obtenu selon la méthode de dérivation FCO.

L'étape S2 de vérification de redondance n'est pas mise en œuvre.

Au cours de l'étape S3 précitée, il est procédé à l'application d'une première fonction médian f1 sur les vecteurs contenus dans la liste L₁ délivrant un premier vecteur de mouvement de disparité, à l'application d'une deuxième fonction médian f2 sur les vecteurs contenus dans la liste L₂ délivrant un deuxième vecteur de mouvement de disparité, et à l'application d'une troisième fonction médian f3 sur les vecteurs contenus dans la liste L₃ délivrant un troisième vecteur de mouvement de disparité. Puis il est procédé à l'application d'une quatrième fonction médian f4 à la fois sur les premier, deuxième et troisième vecteurs de mouvement de disparité délivrés.

### Description détaillée du procédé de codage de l'invention

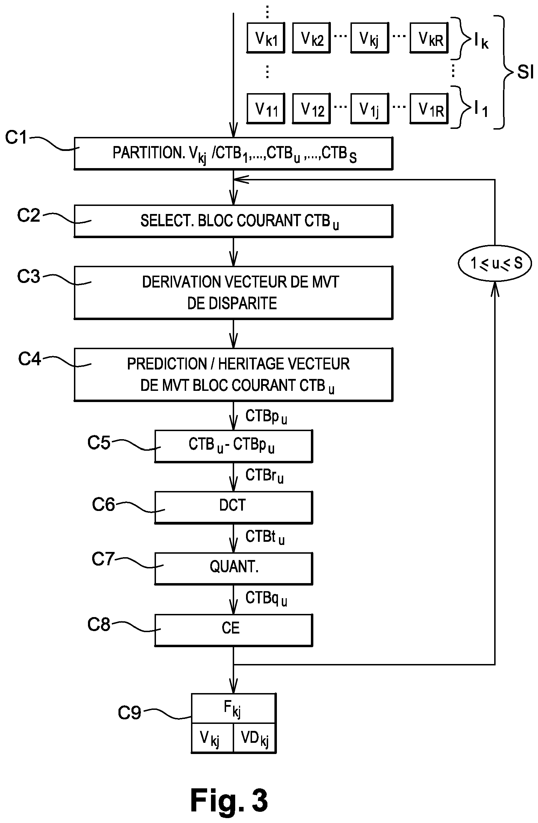

Un mode de réalisation de l'invention va maintenant être décrit, dans lequel le procédé de codage selon l'invention est utilisé pour coder une séquence d'images selon un flux binaire proche de celui qu'on obtient par un codage selon la norme en cours d'élaboration 3D-HEVC. Dans ce mode de réalisation, le procédé de codage selon l'invention est par exemple implémenté de manière logicielle ou matérielle par modifications d'un codeur initialement conforme à la norme HEVC 3D. Le procédé de codage selon l'invention est représenté sous la forme d'un algorithme comportant des étapes C1 à C9 telles que représentées à la **figure 3****.**

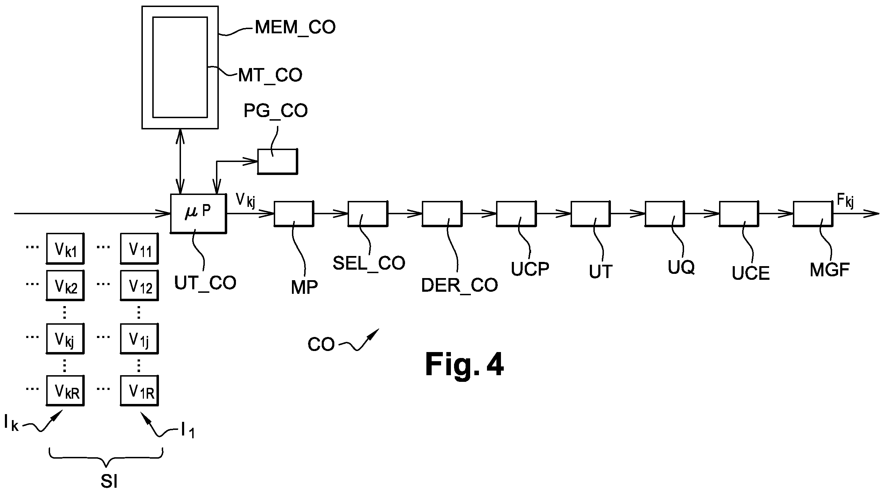

Selon le mode de réalisation de l'invention, le procédé de codage selon l'invention est implémenté dans un dispositif de codage CO représenté à la **figure 4****.** Un tel dispositif de codage comprend une mémoire MEM_CO comprenant une mémoire tampon MT_CO, une unité de traitement UT_CO équipée par exemple d'un microprocesseur µP et pilotée par un programme d'ordinateur PG_CO qui met en œuvre le procédé de codage selon l'invention. A l'initialisation, les instructions de code du programme d'ordinateur PG_CO sont par exemple chargées dans une mémoire RAM avant d'être exécutées par le processeur de l'unité de traitement UT_CO.

Comme déjà expliqué plus haut dans la description, le procédé de codage selon l'invention est destiné à s'appliquer à une image ou à une séquence d'images SI selon un flux binaire proche de celui qu'on obtient par un codage/décodage conforme par exemple à la norme en cours d'élaboration 3D-HEVC.

Le ou les images considérées peuvent être par exemple sous le format MVV ou MVD. En référence à la **figure 3****,** la séquence d'images SI comprend un nombre N (N≥1) d'images tel que:
- à l'instant t₁, l'image I₁ comprend une pluralité de R vues V₁₁, V₁₂, ..., V₁ⱼ,..., V_{1R}, - ....
- à l'instant tₖ, l'image Iₖ comprend une pluralité de R vues Vₖ₁, Vₖ₂, ..., Vₖⱼ,..., V_{kR}, - ....
- à l'instant t_{N}, l'image I_{N} comprend une pluralité de R vues V_{N1}, V_{N2}, ..., V_{Nj},..., V_{NR},
avec 1≤j≤R et 1≤k≤N.

Une image courante Iₖ à l'instant tₖ est alors considérée dans la séquence d'images SI.

Au cours d'une étape préalable C1 représentée à la **figure 3****,** il est procédé, de façon connue en soi, au partitionnement d'une vue courante Vₖⱼ de l'image courante Iₖ appartenant à la séquence SI d'images, en une pluralité de blocs CTB₁, CTB₂, ..., CTBᵤ,..., CTB_{S} par exemple de taille 64x64 pixels (1≤u≤S). Une telle étape de partitionnement est mise en œuvre par un module logiciel de partitionnement MP représenté sur la **figure 4****,** lequel module est piloté par le microprocesseur µP de l'unité de traitement UT_CO.

Il convient de noter qu'au sens de l'invention, le terme « bloc » signifie unité de codage (de l'anglais « coding unit »). Cette dernière terminologie est notamment utilisée dans la norme HEVC, par exemple dans le document « B. Bross, W.-J. Han, J.-R. Ohm, G. J. Sullivan, and T. Wiegand, "High efficiency video coding (HEVC) text spécification draft 6," document JCTVC-H1003 of JCT-VC, San Jose CA, USA, February 2012».

En particulier, une telle unité de codage regroupe des ensembles de pixels de forme rectangulaire ou carrée, encore appelés blocs, macroblocs, ou bien des ensembles de pixels présentant d'autres formes géométriques.

Au cours d'une étape C2 représentée à la **figure 3****,** un bloc CTBᵤ de la vue courante Vₖⱼ est sélectionné en tant que bloc courant à coder.

En référence à la **figure 4****,** ladite étape de sélection C2 est mise en œuvre par un module de sélection SEL_CO du codeur CO, lequel module est piloté par le microprocesseur µP de l'unité de traitement UT_CO.

En référence à la **figure 3****,** il est procédé, au cours d'une étape C3, à la dérivation d'un vecteur de mouvement de disparité. Une telle étape est effectuée conformément au procédé de dérivation selon l'invention.

En référence à la **figure 4****,** ladite étape de dérivation C3 est mise en œuvre par un module de dérivation DER_CO en tout point identique au module de dérivation DER de la **figure 2****,** ledit module DER_CO étant piloté par le microprocesseur µP de l'unité de traitement UT_CO.

En référence à la **figure 3****,** il est procédé, au cours d'une étape C4, au codage prédictif du bloc courant CTBᵤ par des techniques connues de prédiction intra et/ou inter, au cours duquel le bloc courant CTBᵤ est prédit par rapport à au moins un bloc précédemment codé puis décodé.

En référence à la **figure 4****,** ladite étape de codage prédictif C4 est mise en œuvre par une unité de codage prédictif UCP qui est apte à effectuer un codage prédictif du bloc courant, selon les techniques de prédiction classiques, telles que par exemple en mode Intra et/ou Inter. Ledit module UCP est piloté par le microprocesseur µP de l'unité de traitement UT_CO.

Selon une première variante de réalisation, un vecteur de mouvement du bloc courant CTBᵤ est déterminé selon le mode AMVP, c'est-à-dire prédit par sélection d'un vecteur de mouvement dans une liste de vecteurs de mouvement pouvant comprendre des vecteurs de mouvement temporels et/ou des vecteurs de mouvement de disparité, ainsi que le vecteur de mouvement de disparité final DV_{f} obtenu à la suite de l'étape de dérivation C3.

Selon une deuxième variante de réalisation, un vecteur de mouvement du bloc courant CTBᵤ est déterminé selon le mode MERGE, c'est-à-dire par héritage d'un vecteur de mouvement contenu dans une liste de vecteurs de mouvement pouvant comprendre des vecteurs de mouvement temporels et/ou des vecteurs de mouvement de disparité, ainsi que le vecteur de mouvement de disparité final DV_{f} obtenu à la suite de l'étape de dérivation C3.

Parmi les prédictions possibles pour un bloc courant qui ont été déterminées à l'étape C4, la prédiction optimale est choisie selon un critère débit distorsion bien connu de l'homme du métier.

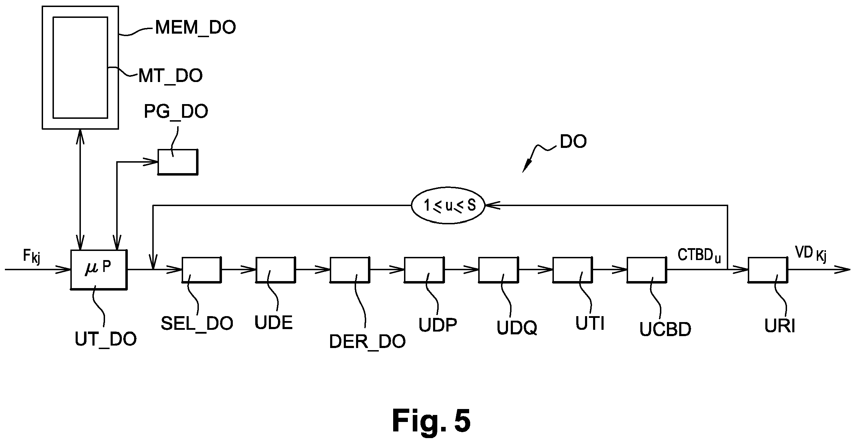

Ladite étape de codage prédictif précitée permet de construire un bloc prédit CTBpᵤ qui est une approximation du bloc courant CTBᵤ. Les informations relatives à ce codage prédictif seront ultérieurement inscrites dans un flux transmis à un décodeur DO tel que représenté sur la **figure 5****.** Dans le cas où le vecteur de mouvement de disparité obtenu à l'aide du procédé de dérivation selon l'invention est sélectionné comme vecteur de prédiction optimal, de telles informations comprennent l'indice de positionnement de ce vecteur dans la liste qui le contient. ainsi que l'indice de la liste qui contient le vecteur sélectionné.

Au cours d'une étape C5 représentée à la **figure 3****,** l'unité de codage prédictif UCP de la **figure 4** procède à la soustraction du bloc prédit CTBpᵤ du bloc courant CTBᵤ pour produire un bloc résidu CTBrᵤ.

Au cours d'une étape C6 représentée à la **figure 3****,** il est procédé à la transformation du bloc résidu CTBrᵤ selon une opération classique de transformation directe telle que par exemple une transformation en cosinus discrètes de type DCT, pour produire un bloc transformé CTBtᵤ.

Ladite étape C6 est mise en œuvre par une unité de transformation UT représentée à la **figure 4****,** ladite unité étant pilotée par le microprocesseur µP de l'unité de traitement UT_CO.

Au cours d'une étape C7 représentée à la **figure 4****,** il est procédé à la quantification du bloc transformé CTBtᵤ selon une opération classique de quantification, telle que par exemple une quantification scalaire. Un bloc de coefficients quantifiés CTBqᵤ est alors obtenu.

Ladite étape C7 est mise en œuvre par une unité de quantification UQ représentée à la **figure 4****,** ladite unité étant pilotée par le microprocesseur µP de l'unité de traitement UT_CO.

Au cours d'une étape C8 représentée à la **figure 3****,** il est procédé au codage entropique du bloc de coefficients quantifiés CTBqᵤ. Dans le mode préféré de réalisation, il s'agit d'un codage entropique CABAC bien connu de l'homme du métier.

L'étape C8 est mise en œuvre par une unité de codage entropique UCE représentée à la **figure 4****,** ladite unité étant pilotée par le microprocesseur µP de l'unité de traitement UT_CO.

Les sous-étapes de codage qui viennent d'être décrites ci-dessus sont mises en œuvre pour tous les blocs à coder de l'image courante Iₖ considérée.

Les étapes de codage C2 à C8 qui viennent d'être décrites ci-dessus sont mises en œuvre pour tous les blocs à coder de la vue courante Vₖⱼ considérée.

Au cours d'une étape C9 représentée à la **figure 3****,** il est procédé à la production d'un flux de bits Fₖⱼ représentant la vue courante Vₖⱼ codée, ainsi qu'une version décodée VDₖⱼ de cette dernière, laquelle est susceptible d'être réutilisée en tant que vue de référence pour coder d'autres vues de la séquence SI d'images.

En référence à la **figure 4****,** l'étape de production C9 d'un flux courant Fₖⱼ est mise en œuvre par un module MGF de génération de flux qui est adapté à produire des flux de données, telles que des bits par exemple. Ledit module MGF est piloté par le microprocesseur µP de l'unité de traitement UT_CO.

Le flux courant Fₖⱼ est ensuite transmis par un réseau de communication (non représenté), à un terminal distant. Celui-ci comporte le décodeur DO représenté à la **figure 5** qui sera décrit plus en détail dans la suite de la description.

### Description détaillée d'un mode de réalisation de la partie décodage

Un mode de réalisation du procédé de décodage selon l'invention va maintenant être décrit, dans lequel le procédé de décodage est implémenté de manière logicielle ou matérielle par modifications d'un décodeur initialement conforme à la norme 3D-HEVC.

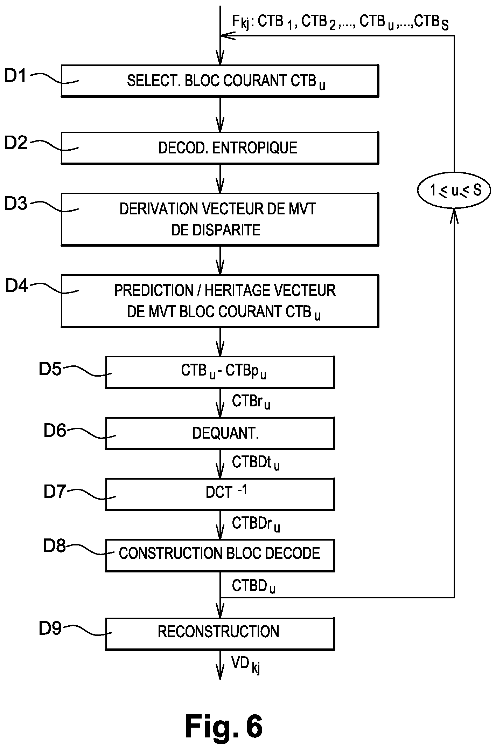

Le procédé de décodage selon l'invention est représenté sous la forme d'un algorithme comportant des étapes D1 à D9 représentées à la **figure 6****.**

Selon le mode de réalisation de l'invention, le procédé de décodage selon l'invention est implémenté dans un dispositif de décodage DO représenté à la **figure 5****.**

Comme illustré en **figure 5****,** un tel dispositif de décodage comprend une mémoire MEM_DO comprenant une mémoire tampon MT_DO, une unité de traitement UT_DO équipée par exemple d'un microprocesseur µP et pilotée par un programme d'ordinateur PG_DO qui met en œuvre le procédé de décodage selon l'invention. A l'initialisation, les instructions de code du programme d'ordinateur PG_DO sont par exemple chargées dans une mémoire RAM avant d'être exécutées par le processeur de l'unité de traitement UT_DO.

Le procédé de décodage représenté sur la **figure 6** s'applique à toute image courante de ladite séquence SI d'images à décoder.

A cet effet, des informations représentatives de l'image courante Iₖ à décoder sont identifiées dans le flux Fₖⱼ reçu au décodeur DO.

Au cours d'une étape D1 représentée à la **figure 6****,** il est procédé à la sélection, dans le flux Fₖj d'un bloc CTBᵤ à décoder.

En référence à la **figure 5****,** ladite étape de sélection D1 est mise en œuvre par un module de sélection SEL_DO du décodeur DO, lequel module est piloté par le microprocesseur µP de l'unité de traitement UT_DO.

Au cours d'une étape D2 représentée à la **figure 6****,** il est procédé au décodage entropique des éléments de syntaxe liés au bloc courant CTBᵤ par lecture du flux Fₖ à l'aide d'un pointeur de flux.

Plus précisément, les éléments de syntaxe liés au bloc courant sont décodés par une unité UDE de décodage entropique CABAC tel que représentée à la **figure 5****,** ladite unité étant pilotée par le microprocesseur µP de l'unité de traitement UT_DO. Une telle unité est bien connue en tant que telle et ne sera pas décrite plus avant.

En référence à la **figure 6****,** il est procédé, au cours d'une étape D3, à la dérivation d'un vecteur de mouvement de disparité. Une telle étape est effectuée conformément au procédé de dérivation selon l'invention.

En référence à la **figure 5****,** ladite étape de dérivation D3 est mise en œuvre par un module de dérivation DER_DO en tout point identique au module de dérivation DER de la **figure 2****,** ledit module DER_DO étant piloté par le microprocesseur µP de l'unité de traitement UT_DO.

Au cours d'une étape D4 représentée à la **figure 6****,** il est procédé au décodage prédictif du bloc courant CTBᵤ par des techniques connues de prédiction intra et/ou inter, au cours duquel le bloc CTBᵤ est prédit par rapport à au moins un bloc précédemment décodé.

Au cours de cette étape, le décodage prédictif est effectué à l'aide des éléments de syntaxe décodés à l'étape précédente et comprenant notamment le type de prédiction (inter ou intra).

Dans le cas où une prédiction ou bien un héritage de vecteur de mouvement est appliquée au bloc courant CTBᵤ et dans le cas où le vecteur de mouvement de disparité obtenu à l'aide du procédé de dérivation selon l'invention a été sélectionné au codage comme vecteur optimisant la prédiction selon le critère débit-distorsion, lesdits éléments de syntaxe décodés comprennent l'indice de positionnement de ce vecteur dans la liste de vecteurs de mouvement de disparité qui le contient. Dans le cas particulier où plusieurs listes ont été construites, lesdits éléments de syntaxe décodés comprennent également l'indice de la liste qui contient le vecteur sélectionné.

Ladite étape D4 de décodage prédictif précitée permet de construire un bloc prédit CTBpᵤ par rapport à un bloc précédemment décodé.

Ladite étape D4 est mise en œuvre par une unité de décodage prédictif UDP telle que représentée sur la **figure 5****,** ladite unité étant pilotée par le microprocesseur µP de l'unité de traitement UT_DO.

Au cours d'une étape D5 représentée à la **figure 6****,** l'unité de décodage prédictif UDP de la **figure 5** procède à la soustraction du bloc prédit CTBpᵤ du bloc courant CTBᵤ pour produire un bloc résidu CTBrᵤ.

Au cours d'une étape D6 représentée à la **figure 6****,** il est procédé à la déquantification du bloc résidu quantifié CTBrᵤ selon une opération classique de déquantification qui est l'opération inverse de la quantification effectuée à l'étape C7 précitée, pour produire un bloc déquantifié décodé CTBDtᵤ.

Ladite étape D6 est mise en œuvre par une unité de déquantification UDQ représentée à la **figure 5****,** ladite unité étant pilotée par le microprocesseur µP de l'unité de traitement UT_DO.

Au cours d'une étape D7 représentée à la **figure 6****,** il est procédé à la transformation inverse du bloc déquantifié CTBDtᵤ qui est l'opération inverse de la transformation directe effectuée à l'étape de codage C6 précitée. Un bloc résidu décodé CTBDrᵤ est alors obtenu.

Ladite étape D7 est mise en œuvre par une unité de transformation inverse UTI représentée à la **figure** 5, ladite unité étant pilotée par le microprocesseur µP de l'unité de traitement UT_DO.

Au cours d'une étape D8 représentée à la **figure 6****,** il est procédé à la construction du bloc décodé CTBDᵤ en ajoutant au bloc prédit CTBpᵤ le bloc résidu décodé CTBDrᵤ. Le bloc décodé CTBDᵤ est ainsi rendu disponible pour être utilisé par le décodeur DO de la **figure 5****.**

L'étape D8 est mise en œuvre par une unité UCBD de construction de bloc décodé telle que représentée à la **figure 5****,** ladite unité étant pilotée par le microprocesseur µP de l'unité de traitement UT_DO.

Les étapes de décodage D1 à D8 qui viennent d'être décrites ci-dessus sont à nouveau mises en œuvre pour tous les blocs à décoder de la vue courante Vₖⱼ considérée.

En référence à la **figure 6****,** il est procédé, au cours d'une étape D9, à la reconstruction d'une vue décodée VDₖⱼ.

En référence à la **figure 5****,** l'étape de reconstruction D9 est mise en œuvre par une unité de reconstruction URI qui écrit les blocs décodés dans une vue décodée VDₖⱼ au fur et à mesure que ces blocs deviennent disponibles. Ladite unité est pilotée par le microprocesseur µP de l'unité de traitement UT_DO.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

## Revendications

1. Procédé de décodage d'une image courante (Iₖ) comprenant au moins deux vues qui sont respectivement représentatives d'une même scène, ledit procédé de décodage comprenant une étape (D3) de dérivation d'un vecteur de mouvement de disparité, dit vecteur de mouvement de disparité final, ledit procédé de décodage étant **caractérisé en ce que**, au cours de ladite étape de dérivation, il comprend les étapes consistant à :
- construire (S1) une pluralité de listes (L₁, L₂) de vecteurs de mouvement de disparité, ladite pluralité de listes comprenant au moins une liste dans laquelle au moins deux vecteurs de mouvement de disparité ont été obtenus respectivement selon deux méthodes d'estimation différentes,
- appliquer (S3) une fonction aux vecteurs de mouvement de disparité de chaque liste pour délivrer un vecteur de mouvement de disparité pour chaque liste,
- appliquer une fonction aux vecteurs de disparités délivrés pour obtenir le vecteur de disparité final,
dans lequel les fonctions appliquées appartiennent à la liste des fonctions statistiques : médian, médian pondéré, moyenne, moyenne pondérée.

2. Procédé de décodage selon la revendication 1, comprenant, préalablement à ladite étape d'application d'une fonction, une étape (S2) consistant à limiter, dans au moins une liste, le nombre de vecteurs de mouvement de disparité.

3. Procédé de décodage selon la revendication 2, ladite étape de limitation consistant à :
- vérifier, dans au moins une liste de vecteurs de mouvement de disparité, si au moins deux vecteurs de mouvement de disparité sont redondants vis-à-vis de leur amplitude et orientation,
- supprimer de ladite liste l'un desdits deux vecteurs, en cas de vérification positive.

4. Dispositif (DO) de décodage d'une image courante (Iₖ) comprenant au moins deux vues qui sont respectivement représentatives d'une même scène, ledit dispositif étant adapté pour mettre en œuvre le procédé de décodage selon l'une quelconque des revendications 1 à 3, ledit dispositif de décodage comprenant un dispositif de dérivation (DER) d'un vecteur de mouvement de disparité, dit vecteur de mouvement de disparité final, **caractérisé en ce que** le dispositif de dérivation comprend :
- des moyens (CTR) de construction d'une pluralité de listes de vecteurs de mouvement de disparité, ladite pluralité de listes comprenant au moins une liste comprenant au moins deux vecteurs de mouvement de disparité obtenus respectivement selon deux méthodes d'estimation différentes,
- des moyens (APP) d'application d'une fonction auxdits au moins deux vecteurs de mouvement de disparité de chaque liste pour délivrer un vecteur de mouvement de disparité pour chaque liste.
- des moyens (APP) d'application d'une fonction aux vecteurs de disparités délivrés pour obtenir le vecteur de disparité final,
dans lequel les fonctions appliquées appartiennent à la liste des fonctions statistiques : médian, médian pondéré, moyenne, moyenne pondérée

5. Programme d'ordinateur comportant des instructions de code de programme pour l'exécution des étapes du procédé de décodage selon l'une quelconque des revendications 1 à 3, lorsque ledit programme est exécuté sur un ordinateur.

6. Support d'enregistrement lisible par un ordinateur sur lequel est enregistré un programme d'ordinateur comprenant des instructions de code de programme pour l'exécution des étapes du procédé de décodage selon l'une quelconque des revendications 1 à 3, lorsque ledit programme est exécuté par un ordinateur.

7. Procédé de codage d'une image courante (Iₖ) comprenant au moins deux vues qui sont respectivement représentatives d'une même scène, ledit procédé de codage comprenant une étape (C3) de dérivation d'un vecteur de mouvement de disparité, dit vecteur de mouvement de disparité final, ledit procédé de codage étant **caractérisé en ce que**, au cours de ladite étape de dérivation, il comprend les étapes consistant à :
- construire (S1) une pluralité de listes de vecteurs de mouvement de disparité, ladite pluralité de listes comprenant au moins une liste dans laquelle au moins deux vecteurs de mouvement de disparité ont été obtenus respectivement selon deux méthodes d'estimation différentes,
- appliquer (S3) une fonction aux vecteurs de mouvement de chaque liste, pour délivrer un vecteur de mouvement de disparité pour chaque liste,
- appliquer une fonction aux vecteurs de disparités délivrés pour obtenir le vecteur de disparité final,
dans lequel les fonctions appliquées appartiennent à la liste des fonctions statistiques : médian, médian pondéré, moyenne, moyenne pondérée

8. Procédé de codage selon la revendication 7, comprenant, préalablement à ladite étape d'application d'une fonction, une étape (S2) consistant à limiter, dans au moins une liste, le nombre de vecteurs de mouvement de disparité.

9. Procédé de codage selon la revendication 8, ladite étape de limitation consistant à :
- vérifier, dans au moins une liste de vecteurs de mouvement de disparité, si au moins deux vecteurs de mouvement de disparité sont redondants vis-à-vis de leur amplitude et orientation,
- supprimer de ladite liste l'un desdits deux vecteurs, en cas de vérification positive.

10. Dispositif (CO) de codage d'une image courante (Iₖ) comprenant au moins deux vues qui sont respectivement représentatives d'une même scène, ledit dispositif étant adapté pour mettre en œuvre le procédé de codage selon l'une quelconque des revendications 7 à 9, ledit dispositif de codage comprenant un dispositif (DER_CO) de dérivation d'un vecteur de mouvement de disparité, dit vecteur de mouvement de disparité final, **caractérisé en ce que** le dispositif de dérivation comprend :
- des moyens (CTR) de construction d'une pluralité de listes de vecteurs de mouvement de disparité, ladite pluralité de listes comprenant au moins une liste comprenant au moins deux vecteurs de mouvement de disparité obtenus respectivement selon deux méthodes d'estimation différentes,
- des moyens (APP) d'application d'une fonction aux vecteurs de mouvement de disparité de chaque liste pour délivrer un vecteur de mouvement de disparité pour chaque liste,
- des moyens (APP) d'application d'une fonction aux vecteurs de disparités délivrés pour obtenir le vecteur de disparité final,
dans lequel les fonctions appliquées appartiennent à la liste des fonctions statistiques : médian, médian pondéré, moyenne, moyenne pondérée.

11. Programme d'ordinateur comportant des instructions de code de programme pour l'exécution des étapes du procédé de codage selon l'une quelconque des revendications 7 à 9, lorsque ledit programme est exécuté sur un ordinateur.

## Patentansprüche

1. Verfahren zur Decodierung eines aktuellen Bildes (Iₖ), das mindestens zwei Ansichten umfasst, die jeweils für dieselbe Szene repräsentativ sind, wobei das Decodierungsverfahren einen Schritt (D3) des Herleitens eines Disparitätsbewegungsvektors, endgültiger Disparitätsbewegungsvektor genannt, umfasst, wobei das Decodierungsverfahren **dadurch gekennzeichnet ist, dass** es während des Herleitungsschritts die folgenden Schritte umfasst:
- Erstellen (S1) einer Mehrzahl von Listen (L₁, L₂) mit Disparitätsbewegungsvektoren, wobei die Mehrzahl von Listen mindestens eine Liste umfasst, in der mindestens zwei Disparitätsbewegungsvektoren gemäß zwei verschiedenen Schätzmethoden erhalten worden sind,
- Anwenden (S3) einer Funktion auf die Disparitätsbewegungsvektoren jeder Liste, um einen Disparitätsbewegungsvektor für jede Liste auszugeben,
- Anwenden einer Funktion auf die ausgegebenen Disparitätsvektoren, um den endgültigen Disparitätsvektor zu erhalten,
wobei die angewandten Funktionen der Liste der statistischen Funktionen angehören: Median, gewichteter Median, Mittelwert, gewichteter Mittelwert.

2. Decodierungsverfahren nach Anspruch 1, das vor dem Schritt des Anwendens einer Funktion einen Schritt (S2) umfasst, der darin besteht, in mindestens einer Liste die Anzahl von Disparitätsbewegungsvektoren zu begrenzen.

3. Decodierungsverfahren nach Anspruch 2, wobei der Begrenzungsschritt darin besteht:
- in mindestens einer Liste mit Disparitätsbewegungsvektoren zu verifizieren, ob mindestens zwei Disparitätsbewegungsvektoren im Hinblick auf ihre Amplitude und Ausrichtung redundant sind,
- im Fall der positiven Verifizierung einen der beiden Vektoren aus der Liste zu löschen.

4. Vorrichtung (DO) zur Decodierung eines aktuellen Bildes (Iₖ), das mindestens zwei Ansichten umfasst, die jeweils für dieselbe Szene repräsentativ sind, wobei die Vorrichtung geeignet ist, das Decodierungsverfahren nach einem der Ansprüche 1 bis 3 umzusetzen, wobei die Decodierungsvorrichtung eine Vorrichtung zur Herleitung (DER) eines Disparitätsbewegungsvektors, endgültiger Disparitätsbewegungsvektor genannt, umfasst, **dadurch gekennzeichnet, dass** die Herleitungsvorrichtung umfasst:
- Einrichtungen (CTR) zum Erstellen einer Mehrzahl von Listen mit Disparitätsbewegungsvektoren, wobei die Mehrzahl von Listen mindestens eine Liste umfasst, die mindestens zwei Disparitätsbewegungsvektoren umfasst, die gemäß zwei verschiedenen Schätzmethoden erhalten worden sind,
- Einrichtungen (APP) zum Anwenden einer Funktion auf die mindestens zwei Disparitätsbewegungsvektoren jeder Liste, um einen Disparitätsbewegungsvektor für jede Liste auszugeben,
- Einrichtungen (APP) zum Anwenden einer Funktion auf die ausgegebenen Disparitätsvektoren, um den endgültigen Disparitätsvektor zu erhalten, wobei die angewandten Funktionen der Liste der statistischen Funktionen angehören: Median, gewichteter Median, Mittelwert, gewichteter Mittelwert.

5. Computerprogramm mit Programmcodeanweisungen zum Ausführen der Schritte des Decodierungsverfahrens nach einem der Ansprüche 1 bis 3, wenn das Programm auf einem Computer ausgeführt wird.

6. Computerlesbares Speichermedium, auf dem ein Computerprogramm gespeichert ist, das Programmcodeanweisungen zum Ausführen der Schritte des Decodierungsverfahrens nach einem der Ansprüche 1 bis 3 umfasst, wenn das Programm von einem Computer ausgeführt wird.

7. Verfahren zur Codierung eines aktuellen Bildes (Iₖ), das mindestens zwei Ansichten umfasst, die jeweils für dieselbe Szene repräsentativ sind, wobei das Codierungsverfahren einen Schritt (C3) des Herleitens eines Disparitätsbewegungsvektors, endgültiger Disparitätsbewegungsvektor genannt, umfasst, wobei das Codierungsverfahren **dadurch gekennzeichnet ist, dass** es während des Herleitungsschritts die folgenden Schritte umfasst:
- Erstellen (S1) einer Mehrzahl von Listen mit Disparitätsbewegungsvektoren, wobei die Mehrzahl von Listen mindestens eine Liste umfasst, in der mindestens zwei Disparitätsbewegungsvektoren gemäß zwei verschiedenen Schätzmethoden erhalten worden sind,
- Anwenden (S3) einer Funktion auf die Bewegungsvektoren jeder Liste, um einen Disparitätsbewegungsvektor für jede Liste auszugeben,
- Anwenden einer Funktion auf die ausgegebenen Disparitätsvektoren, um den endgültigen Disparitätsvektor zu erhalten,
wobei die angewandten Funktionen der Liste der statistischen Funktionen angehören: Median, gewichteter Median, Mittelwert, gewichteter Mittelwert.

8. Codierungsverfahren nach Anspruch 7, das vor dem Schritt des Anwendens einer Funktion einen Schritt (S2) umfasst, der darin besteht, in mindestens einer Liste die Anzahl von Disparitätsbewegungsvektoren zu begrenzen.

9. Codierungsverfahren nach Anspruch 8, wobei der Begrenzungsschritt darin besteht:
- in mindestens einer Liste mit Disparitätsbewegungsvektoren zu verifizieren, ob mindestens zwei Disparitätsbewegungsvektoren im Hinblick auf ihre Amplitude und Ausrichtung redundant sind,
- im Fall der positiven Verifizierung einen der beiden Vektoren aus der Liste zu löschen.

10. Vorrichtung (CO) zur Codierung eines aktuellen Bildes (Iₖ), das mindestens zwei Ansichten umfasst, die jeweils für dieselbe Szene repräsentativ sind, wobei die Vorrichtung geeignet ist, das Codierungsverfahren nach einem der Ansprüche 7 bis 9 umzusetzen, wobei die Codierungsvorrichtung eine Vorrichtung (DER_CO) zur Herleitung eines Disparitätsbewegungsvektors, endgültiger Disparitätsbewegungsvektor genannt, umfasst, **dadurch gekennzeichnet, dass** die Herleitungsvorrichtung umfasst:
- Einrichtungen (CTR) zum Erstellen einer Mehrzahl von Listen mit Disparitätsbewegungsvektoren, wobei die Mehrzahl von Listen mindestens eine Liste umfasst, die mindestens zwei Disparitätsbewegungsvektoren umfasst, die gemäß zwei verschiedenen Schätzmethoden erhalten worden sind,
- Einrichtungen (APP) zum Anwenden einer Funktion auf die Disparitätsbewegungsvektoren jeder Liste, um einen Disparitätsbewegungsvektor für jede Liste auszugeben,
- Einrichtungen (APP) zum Anwenden einer Funktion auf die ausgegebenen Disparitätsvektoren, um den endgültigen Disparitätsvektor zu erhalten, wobei die angewandten Funktionen der Liste der statistischen Funktionen angehören: Median, gewichteter Median, Mittelwert, gewichteter Mittelwert.

11. Computerprogramm mit Programmcodeanweisungen zum Ausführen der Schritte des Codierungsverfahrens nach einem der Ansprüche 7 bis 9, wenn das Programm auf einem Computer ausgeführt wird.

## Claims

1. Method of decoding a current image (Iₖ) comprising at least two views which are respectively representative of a same scene, said decoding method comprising a step (D3) of derivation of a disparity motion vector, referred to as final disparity motor vector, said decoding method being **characterized in that**, during said derivation step, it comprises the steps consisting in:
- constructing (S1) a plurality of lists (L₁, L₂) of disparity motion vectors, said plurality of lists comprising at least one list in which at least two disparity motion vectors have been obtained respectively according to two different estimation methods,
- applying (S3) a function to the disparity motion vectors of each list to deliver a disparity motion vector for each list,
- applying a function to the disparity vectors delivered to obtain the final disparity vector,
wherein the functions applied belong to the list of the statistical functions: median, weighted median, average, weighted average.

2. Decoding method according to Claim 1, comprising, prior to said step of application of a function, a step (S2) consisting in limiting, in at least one list, the number of disparity motion vectors.

3. Decoding method according to Claim 2, said limiting step consisting in:
- checking, in at least one list of disparity motion vectors, whether at least two disparity motion vectors are redundant with respect to their amplitude and orientation,
- deleting from said list one of said two vectors, if the check is positive.

4. Device (DO) for decoding a current image (Iₖ) comprising at least two views which are respectively representative of a same scene, said device being adapted to implement the decoding method according to any one of Claims 1 to 3, said decoding device comprising a derivation device (DER) for deriving a disparity motion vector, referred to as final disparity motion vector, **characterized in that** the derivation device comprises:
- means (CTR) for constructing a plurality of lists of disparity motion vectors, said plurality of lists comprising at least one list comprising at least two disparity motion vectors obtained respectively according to two different estimation methods,
- means (APP) for applying a function to said at least two disparity motion vectors of each list to deliver a disparity motion vector for each list,
- means (APP) for applying a function to the disparity vectors delivered to obtain the final disparity vector,
wherein the functions applied belong to the list of the statistical functions: median, weighted median, average, weighted average.

5. Computer program comprising program code instructions for the execution of the steps of the decoding method according to any one of Claims 1 to 3, when said program is run on a computer.

6. Computer-readable storage medium on which is stored a computer program comprising program code instructions for the execution of the steps of the decoding method according to any one of Claims 1 to 3, when said program is run by a computer.

7. Method for coding a current image (Iₖ) comprising at least two views which are respectively representative of a same scene, said coding method comprising a step (C3) of derivation of a disparity motion vector, referred to as final disparity motion vector, said coding method being **characterized in that**, during said derivation step, it comprises the steps consisting in:
- constructing (S1) a plurality of lists of disparity motion vectors, said plurality of lists comprising at least one list in which at least two disparity motion vectors have been obtained respectively according to two different estimation methods,
- applying (S3) a function to the motion vectors of each list, to deliver a disparity motion vector for each list,
- applying a function to the disparity vectors delivered to obtain the final disparity vector,
wherein the functions applied belong to the list of the statistical functions: median, weighted median, average, weighted average.

8. Coding method according to Claim 7, comprising, prior to said step of application of a function, a step (S2) consisting in limiting, in at least one list, the number of disparity motion vectors.

9. Coding method according to Claim 8, said limiting step consisting in:
- checking, in at least one list of disparity motion vectors, whether at least two disparity motion vectors are redundant with respect to their amplitude and orientation,
- deleting from said list one of said two vectors, if the check is positive.

10. Device (CO) for coding a current image (Iₖ) comprising at least two views which are respectively representative of a same scene, said device being adapted to implement the coding method according to any one of Claims 7 to 9, said coding device comprising a derivation device (DER_CO) for deriving a disparity motion vector, referred to as final disparity motion vector, **characterized in that** the derivation device comprises:
- means (CTR) for constructing a plurality of lists of disparity motion vectors, said plurality of lists comprising at least one list comprising at least two disparity motion vectors obtained respectively according to two different estimation methods,
- means (APP) for applying a function to the disparity motion vectors of each list to deliver a disparity motion vector for each list,
- means (APP) for applying a function to the disparity vectors delivered to obtain the final disparity vector,
wherein the functions applied belong to the list of the statistical functions: median, weighted median, average, weighted average.

11. Computer program comprising program code instructions for the execution of the steps of the coding method according to any one of Claims 7 to 9, when said program is run on a computer.
